# EUROPÄISCHE PATENTANMELDUNG

(11) **EP 1 958 799 A1**
(43) Veröffentlichungstag der Anmeldung: **20.08.2008**
(21) Anmeldenummer: 08001828.6
(22) Anmeldetag: 31.01.2008
(51) Int. Cl.: B60G 3/14, B60G 7/00, B60G 9/02, B60G 13/00, B60K 7/00

(54) **Achsaufhängung für Schwerfahrzeuge**

(30) Priorität: 16.02.2007 DE 202007002349 U; 21.03.2007 DE 202007004178 U
(71) Anmelder: Liebherr-Werk Biberach GmbH, 88400 Biberach an der Riss (DE)
(72) Erfinder: Mollhagen, Klaus-Peter, 87700 Memmingen (DE)
(74) Vertreter: Thoma, Michael

(57) **Zusammenfassung**

Die vorliegende Erfindung betrifft eine Achsaufhängung für Schwerfahrzeuge, insbesondere Trucks wie Large Dump Trucks, mit einem Achsträger, der auf gegenüberliegenden Seiten überstehende Achsteile, vorzugsweise mit jeweils einem Radantrieb, trägt, einer Achsträgerlagerung, die Auf- und Abbewegungen des Achsträgers sowie Pendelbewegungen des Achsträgers um eine im wesentlichen liegende Pendelachse quer zur Längsrichtung der Achsteile zulässt, einer Federeinrichtung zur federnden Abstützung der Auf- und Abbewegungen des Achsträgers an einem Fahrzeugrahmen sowie einer Pendeldämpfungseinrichtung zur Dämpfung der Pendelbewegungen des Achsträgers. Erfindungsgemäß besitzt die Pendeldämpfungseinrichtung eine Drehachse, die an einem mit dem Fahrrahmen verbundenen Teil angelenkt ist und einen an dem Achsträger drehbar angelenkten Dämpfungshebel bei Pendelbewegungen rotatorisch antreibt, der auf zumindest ein an dem Achsträger befestigtes Dämpfungselement einwirkt.

## Beschreibung

Die vorliegende Erfindung betrifft eine Achsaufhängung für Schwerfahrzeuge, insbesondere Trucks wie Large Dump Trucks, mit einem Achsträger, der auf gegenüberliegenden Seiten überstehende Achsteile, vorzugsweise mit jeweils einem Radantrieb, trägt, einer Achsträgerlagerung, die Auf- und Abbewegungen des Achsträgers sowie Pendelbewegungen des Achsträgers um eine im wesentlichen liegende Pendelachse quer zur Längsrichtung der Achsteile zulässt, einer Federeinrichtung zur federnden Abstützung der Auf- und Abbewegungen des Achsträgers an einem Fahrzeugrahmen sowie einer Pendeldämpfungseinrichtung zur Dämpfung der Pendelbewegungen des Achsträgers.

Bei einer bestimmten Truck-Bauart wird die Hinterachse aus zwei annähernd parallel angeordneten Achsteilen gebildet, die rechts und links an einem Achsträger angeordnet sind und durch den genannten Achsträger über entsprechende Lagerstellen mit dem Fahrzeugrahmen bzw. einem damit verbundenen Teil beweglich verbunden sind. An den genannten Achsteilen sind Räder befestigt, so dass sich der Achsträger sozusagen zwischen den rechts und links angeordneten Rädern erstreckt. Vorteilhafterweise sind dabei an den genannten Achsteilen seitlich Radantriebe, insbesondere Einzelradantriebe, angeordnet, mittels derer die genannten Räder angetrieben werden können.

Der Achsträger ist dabei über die genannte Federeinrichtung, die beispielsweise in Form eines Federbeins ausgebildet sein kann, federnd am Fahrzeugrahmen aufgehängt, so dass der Achsträger zusammen mit den daran befestigten Rädern einen vorteilhafterweise größeren Federweg und damit eine vertikale Auf- und Abbewegbarkeit besitzt, um auch größere Bodenunebenheiten, wie sie beispielsweise bei Baugrubenfahrzeugen in dem zu befahrenden unebenen Terrain auftreten, ausgleichen zu können. Andererseits sollen derartige Achsaufhängungen auch um eine liegende, etwa in Fahrtrichtung bzw. Fahrzeuglängsrichtung weisende Pendelachse pendeln können, so dass Fahrbahnunebenheiten, wie beispielsweise schräg verlaufende Längsrillen, zwischen den rechts und links des Achsträgers angeordneten Rädern pendelnd ausgeglichen werden können. Dabei bewegt sich beispielsweise das links am Achsträger angeordnete Rad leicht nach oben, während sich das rechts am Achsträger angeordnete Rad leicht nach unten bewegt.

Bei höheren Fahrgeschwindigkeiten auf unebenen Fahrbahnen kann diese freie Beweglichkeit des Achsträgers um die genannte liegende Pendelachse zusätzlich zu der Auf- und Abbewegbarkeit in aufrechter Richtung sowie die federnden Eigenschaften der Luftbereifung zu unkontrollierten Drehbewegungen der Achseinheiten führen und das Fahrverhalten des Trucks erheblich beeinträchtigen. Um hier Abhilfe zu schaffen, wurde bereits vorgeschlagen, Bewegungsdämpfungseinrichtungen einzusetzen, die in der Regel ölhydraulisch und/oder mechanisch wirken und direkt zwischen den Radeinheiten und dem Fahrzeugrahmen angeordnet sind. Solche Dämpfungseinrichtungen bedingen jedoch üblicherweise eine Begrenzung des Federwegs des Achsträgers bzw. sind große Federwege des Achsträgers in Auf- und Abrichtung nicht ausführbar, wenn solche Bewegungsdämpfer eingesetzt werden. Erschwerend kommen hierbei noch die sehr begrenzten Platzverhältnisse im Bereich der Hinterachse solcher Trucks hinzu.

Hier will die vorliegende Erfindung Abhilfe schaffen. Ihr liegt die Aufgabe zugrunde, eine verbesserte Achsaufhängung der eingangs genannten Art zu schaffen, die Nachteile des Standes der Technik vermeidet und letzteren in vorteilhafter Weise weiterbildet. Vorzugsweise soll die Achsaufhängung dahingehend verbessert werden, dass unkontrollierte Rad- und Achsbewegungen und die entsprechenden Beeinträchtigungen des Fahrverhaltens vermieden werden, ohne den zum Ausgleich auch stärkerer Fahrbahnunebenheiten notwendigen großen Federweg und die Bewegbarkeit des Achsträgers um die vorgenannte Pendelachse zu opfern.

Die vorliegende Erfindung schlägt hierzu eine in besonderer Weise ausgebildete Pendeldämpfungseinrichtung vor, die bei kompaktem Aufbau einen sehr großen Federweg des Achsträgers ermöglicht. Insbesondere wird dabei auf die Radeinheiten mit dem Fahrzeugrahmen direkt verbindende Dämpferstreben verzichtet, um hierdurch nicht den Federweg zu begrenzen und eine platzsparende Anordnung der Aufhängungskomponenten zu verhindern. Erfindungsgemäß besitzt die Pendeldämpfungseinrichtung eine Drehachse, die an einem mit dem Fahrrahmen verbundenen Teil angelenkt ist und einen an dem Achsträger drehbar angelenkten Dämpfungshebel bei Pendelbewegungen rotatorisch antreibt, der auf zumindest ein an dem Achsträger befestigtes Dämpfungselement einwirkt. Es wird also insbesondere anstelle direkt zwischen den Radeinheiten und dem Fahrzeugrahmen angeordneten Dämpfungselementen ein indirekt betätigtes Dämpfungselement verwendet, wobei die Pendelbewegung an sich zunächst in eine Antriebsbewegung eines Stellglieds in Form einer Drehachse umgesetzt wird, welches dann das Dämpfungselement beaufschlagt. Insbesondere kann durch diese indirekte Beaufschlagung des Dämpfungselements letzteres unmittelbar am Achsträger sitzen und gänzlich in dessen Bereich angeordnet sein.

Um einen großen Federweg zu ermöglichen, ist in Weiterbildung der Erfindung die genannte Drehachse fahrzeugrahmenseitig nicht an einem fahrzeugrahmenfesten Punkt angelenkt, sondern in Richtung der Auf- und Abbewegung des Achsträgers beweglich geführt. Hierzu ist eine am Fahrzeugrahmen oder einem damit verbundenen Teil befestigte Führung vorgesehen, in der die Drehachse bzw. ein damit drehfest verbundenes Anschlussstück verschieblich geführt ist. Die Führung sieht dabei für den Anlenkpunkt der Drehachse einen näherungsweise aufrechten Verstellweg vor, der vorteilhafterweise näherungsweise kreisbogenförmig um den Drehpol verlaufen kann, um den sich der Achsträger bei Auf- und Abbewegungen dreht.

Die besagte Führung könnte dabei grundsätzlich unmittelbar am Fahrzeugrahmen bzw. einem Teil hiervon starr befestigt sein. In Weiterbildung der Erfindung jedoch ist die besagte Führung an einem Teil der Federeinrichtung zur Abstützung des Achsträgers befestigt. Umfasst die besagte Federeinrichtung in Weiterbildung der Erfindung ein Federbein, kann die Führung an dem Federbeinteil befestigt sein, welches am Fahrzeugrahmen gelagert ist.

Grundsätzlich kann die Drehachse bzw. das damit verbundene Anschlussstück in der vorgenannten Führung linear verschieblich, jedoch drehfest geführt sein, so dass sozusagen die Drehachse drehfest steht und sich bei Pendelbewegungen des Achsträgers lediglich letzterer gegenüber der Drehachse verdreht. In vorteilhafter Weiterbildung der Erfindung jedoch ist vorgesehen, dass die Drehachse an ihrem führungsseitigen Ende mit einem Pendelanschlag drehfest verbunden ist, der in der vorgenannten Führung verschieblich und drehbar gelagert ist. Der Pendelanschlag ist dabei vorteilhafterweise mit dem Achsträger derart gekoppelt, dass eine Pendelbewegung des Achsträgers in eine vorzugsweise gegenläufige Pendelbewegung des Pendelanschlags umgesetzt wird. Hierdurch kann eine Übersetzung der Pendelbewegungen der Achse in entsprechende Drehbewegungen der Drehachse erreicht werden, die dann über das am Achsträger gelagerte Drehhebelstück das damit gekoppelte, zumindest eine Dämpfungselement betätigt. Je nach Ausbildung des Pendelanschlags und der Koppelung des Pendelanschlags mit dem Achsträger kann eine mehr oder minder ausgeprägte Verstärkung der Drehachsenrotation und damit der Dämpfungswirkung erzielt werden.

Das zumindest eine Dämpfungselement kann grundsätzlich verschieden ausgebildet sein. Nach einer vorteilhaften Ausführung der Erfindung ist das Dämpfungselement längenveränderbar ausgebildet und jeweils gelenkig einerseits mit dem drehbar gelagerten Dämpfungshebel und andererseits mit dem Achsträger verbunden. Beispielsweise können als Dämpfungselemente teleskopierbare Druckfluiddämpfer Verwendung finden. Vorteilhafterweise betätigt der Dämpfungshebel dabei zumindest ein Paar Dämpfungselemente, die auf gegenüberliegenden Seiten des Achsträgers angeordnet sein können. Um eine kompakte Anordnung zu erreichen, sind die Dämpfungselemente dabei vorteilhafterweise unmittelbar an den Seitenflächen des Achsträgers angeordnet, so dass sie sich im wesentlichen vollständig an die Seitenflanken des Achsträgers anschmiegen, wobei nach einer Ausführung der Erfindung die Länge der Dämpfungselemente - grob gesprochen - etwa der Höhe des Achsträgers entsprechen kann. Selbstverständlich sind andere Ausbildung der Dämpfungselemente möglich, wobei eine Anordnung der Dämpfungselemente in der vorbeschriebenen Weise rechts und links seitlich am Achsträger gegenüber nur einem Dämpfungselement den Vorteil aufweisen kann, dass die Pendeldämpfungswirkung in beide Richtungen vergleichmäßigt wird. Das eine Dämpfungselement wird gelenkt, während das andere Dämpfungselement verkürzt wird. Erfolgt eine Pendelbewegung in entgegengesetzte Richtung, erfolgt die Längung bzw. Verkürzung an dem jeweils anderen Dämpfungselement.

Im Sinne einer kleinbauenden Anordnung der Pendeldämpfungseinrichtung kann in Weiterbildung der Erfindung die Drehachse der Pendeldämpfungseinrichtung spitzwinklig geneigt zur Längsachse des Achsträgers angeordnet sein, wobei in vorteilhafter Weiterbildung der Erfindung die Drehachse in etwa in einer senkrechten Mittellängsebene des Achsträgers plaziert sein kann.

Um eine gleichermaßen auf und ab bewegbare und um eine liegende, in Fahrzeuglängsrichtung weisende Pendelachse bewegbare Achsträgerlagerung zu erreichen, kann in Weiterbildung der Erfindung der Achsträger zwei voneinander beabstandete Lagerstellen aufweisen, die vorzugsweise einerseits an einem vorderen Endabschnitt und andererseits an einem hinteren Endabschnitt des Achsträgers angeordnet sind, so dass eine die beiden Lagerstellen verbindende Gerade - grob gesprochen - die Richtung der Pendelachse definiert. Die Lagerstellen können dabei derart angeordnet und/oder der Achsträger derart ausgebildet sein, dass sich eine die Lagerstellen verbindende Gerade etwa in Fahrzeuglängsrichtung in liegender Ausrichtung erstreckt, wobei gewisse Abweichungen hiervon möglich und unter gewissen Umständen sogar vorteilhaft sein können.

Eine der beiden genannten Lagerstellen ist dabei vorteilhafterweise an einem Fahrzeugrahmenteil durch ein Gelenklager gelenkig befestigt, während die andere Lagerstelle des Achsträgers mit der Federeinrichtung verbunden ist, die den Achsträger federnd abstützt. Vorteilhafterweise ist dabei die Federeinrichtung durch ein zweites Gelenklager an dem Achsträger ebenfalls gelenkig befestigt.

In Weiterbildung der Erfindung sind die beiden Gelenklager nach Art eines Kugelgelenks bzw. eines Kardangelenks mehrachsig schwenkbar, um dem Achsträger und damit den daran gelagerten Rädern die gewünschte freie Beweglichkeit in mehreren Bewegungsachsen zu ermöglichen, insbesondere die von der Federeinrichtung gesteuerte Auf- und Abbewegung sowie die Pendelbewegung um die liegende Pendelachse.

Um die Dämpfung der Pendelbewegungen zu unterstützen, können die Lagerstellen in Weiterbildung der Erfindung bezüglich zumindest der Pendelachse wirksame Lagerdämpfungselemente aufweisen, die vorteilhafterweise in die Lager integriert sein können. Nach einer vorteilhaften Ausführung der Erfindung können die genannten Lagerdämpfungselemente zwischen den zueinander beweglichen Lagerteilen eines jeden Lagers angeordnet sein. Durch die integrierte Anordnung der Lagerdämpfungselemente sind einerseits die genannten Lagerdämpfungselemente selbst geschützt. Andererseits kann ein kompakter Aufbau erreicht werden, der keinen im Vergleich zu herkömmlichen Gelenklagern größeren Platzbedarf mit sich bringt.

Die Lagerdämpfungselemente können dabei grundsätzlich verschieden ausgebildet sein. In Weiterbildung der Erfindung können Gummiquetschelemente in die Lager integriert sein, die bei Beanspruchung bzw. Bewegung der Lager um die Pendelachse elastisch verformt werden. Insbesondere können die Lager in Form von kardanisch beweglichen, vorgespannten Gummimetalllagern ausgebildet sein. Nach einer vorteilhaften Ausführung der Erfindung können dabei zwischen den beiden zueinander beweglichen Lagerteilen und/oder in ein Lagerteil vorgespannte Gummielemente integriert sein, die dem Lager die gewünschte kardanische Beweglichkeit geben. Insbesondere ist dabei vorteilhafterweise vorgesehen, dass die Vorspannung der Gummielemente derart bemessen ist, dass bei Bewegungen des Lagers die Gummischichten bzw. -elemente nie in den Zugbereich gelangen, sondern immer im Druckbereich beansprucht werden. In Weiterbildung der Erfindung kann ein Gummischichtpaket mit entsprechend starker Vorspannung Verwendung finden, wobei die Bewegung des Lagers nur durch die Bewegung der Gummischichten erfolgt.

Alternativ oder zusätzlich können in die Gelenklager Federelemente, vorzugsweise in Form eines Federpakets, insbesondere Tellerfederpakets, integriert sein, die eine Rückstellung des Lagers bzw. Gelenklagers in seine Ausgangsstellung bezüglich der Pendelachse bewirken und insofern eine Pendeldämpfung bewirken.

Die Federeinrichtung der Achsaufhängung, die die Auf- und Abbewegung des Achsträgers steuert und abfedert, ist in Weiterbildung der Erfindung in Form eines Federbeins ausgebildet, wobei beispielsweise in vorteilhafter Weiterbildung der Erfindung ein Gasdruckfederbein vorgesehen sein kann.

Das Federbein ist dabei vorteilhafterweise an dem Achsträger mehrachsig schwenkbar angelenkt, um neben den Auf- und Abbewegungen auch die Pendelbewegungen des Achsträgers zu ermöglichen. In bevorzugter Ausführung der Erfindung bildet das Federbein dabei eine Querführungsstrebe, die den Achsträger quer zur Fahrtrichtung, also im wesentlichen in Längsrichtung der Achsteile, an denen die Räder befestigt sind, unverschieblich führt. Das Federbein erfüllt also in Weiterbildung der Erfindung vorteilhafterweise eine Doppelfunktion. Zum einen werden Auf- und Abbewegungen des Achsträgers abgefedert. Zum anderen wird eine seitliche Auslenkung des Achsträgers quer zur Fahrtrichtung durch das Federbein unterbunden. Hierdurch kann auf zusätzliche Lagerstellen für den Achsträger und weitere Verstrebungen, wie Querlenker und dergleichen, verzichtet werden. Der Achsträger ist im wesentlichen nur über die eine am Fahrzeugrahmen angeschlagene Lagerstelle sowie das Federbein aufgehängt, insbesondere dann, wenn die Drehachse der Pendeldämpfungseinrichtung führungsseitig an besagtem Federbein angeschlagen ist.

Das Federbein ist hierbei vorteilhafterweise mittels eines dritten Lagers an dem Fahrzeugrahmen um eine Schwenkachse, die sich parallel zur Längsrichtung der Achsteile, also im wesentlichen liegend quer zur Fahrtrichtung, erstreckt, schwenkbar angelenkt, wobei vorteilhafterweise das genannte dritte Lager derart ausgebildet ist, dass das Federbein in Richtung der genannten Schwenkachse unverschieblich und bezüglich einer liegenden Achse quer zu dieser Schwenkachse starr befestigt ist. Das genannte dritte Lager kann hierbei insbesondere durch zwei voneinander beabstandete, bezogen auf das Federbein seitlich rechts und links angeordnete hülsenartige Lagerpunkte gebildet werden. Das Lager ist also vorteilhafterweise nur einachsig gelenkig, wobei es Kippbewegungen um dazu quer verlaufende Achsen ebenso wie Schiebebewegungen in Richtung der genannten Schwenkachse unterbinden kann.

Die Drehachse der Pendeldämpfungseinrichtung ist vorteilhafterweise mit dem Teil des Federbeins verbunden, der am Fahrzeugrahmen befestigt ist. Dies kann insbesondere das Federbeingehäuse sein, in das eine Federbeinstange eintaucht. Insbesondere kann dabei die zuvor beschriebene Führung an dem Federbeingehäuse starr befestigt sein, an der der zuvor beschriebene Pendelanschlag verschieblich geführt ist.

Mit ihrem anderen Ende ist die Drehachse an dem Achsträger zwischen dessen beiden Lagerstellen angelenkt, vorzugsweise in einem an die die Räder tragenden Achsteil unmittelbar angrenzenden Abschnitt des Achsträgers, der sich etwa - grob gesprochen - mittig zwischen den Lagerstellen befinden kann.

Die Erfindung wird nachfolgend anhand eines Ausführungsbeispiels und zugehöriger Zeichnungen näher erläutert. In den Zeichnungen zeigen:
- Fig. 1:: eine perspektivische Ansicht einer Achsaufhängung nach einer bevorzugten Ausführung der Erfindung schräg von vorne, die den Achsträger mit den beiden daran befestigten Radantrieben und die mit dem Achsträger verbundene Pendeldämpfungseinrichtung zeigt,
- Fig. 2:: die Achsaufhängung aus Fig. 1 in einer perspektivischen Darstellung schräg von hinten, die das Federbein zeigt, über das der Achsträger federnd am Fahrzeugrahmen abgestützt ist,
- Fig. 3:: eine Schnittansicht des Gelenklagers, mit dem das Federbein aus Fig. 2 an dem Achsträger befestigt ist, und
- Fig. 4:: eine Schnittansicht des Gelenklagers, durch das das Federbein aus Fig. 2 am Achsträger befestigt ist, nach einer alternativen Ausführung der Erfindung.

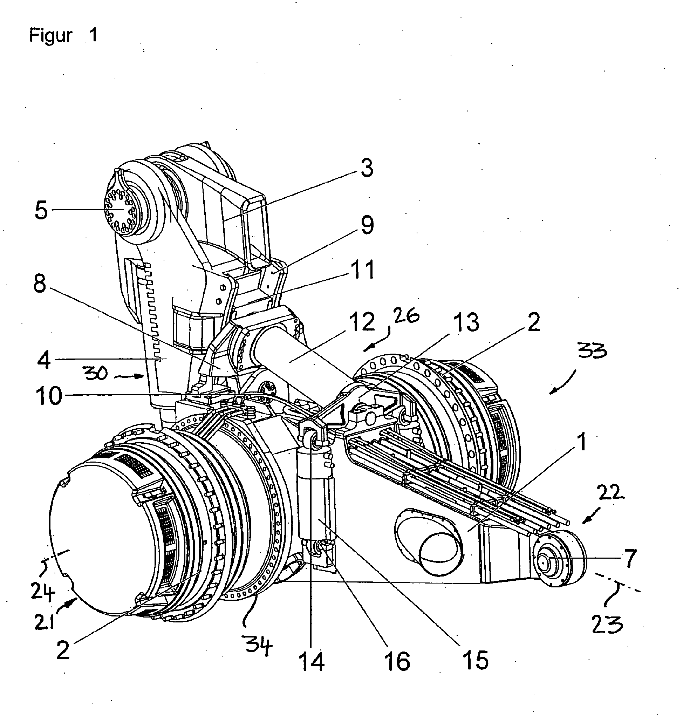

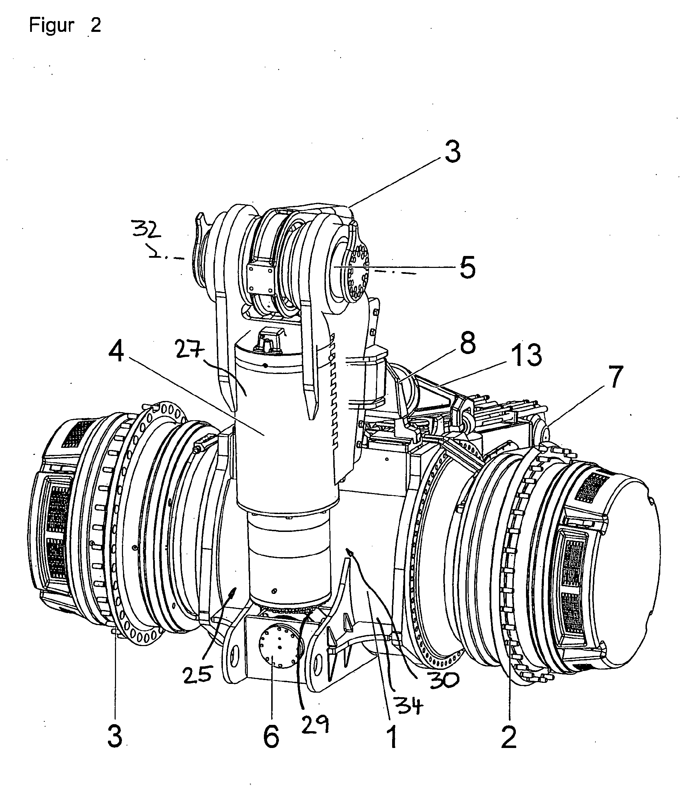

Die in den Figuren 1 und 2 gezeichnete Achsaufhängung 33 umfasst einen insgesamt betrachtet und grob gesprochen länglichen, trägerförmigen Achsträger 1, der in der gezeichneten Ausführung zu seiner Längsachse im wesentlichen liegend und parallel zur Fahrzeuglängsachse angeordnet ist. Wie die Figuren zeigen, ist der Achsträger 1 gehäuseartig ausgebildet. Insbesondere bildet er im Bereich seines hinteren Endabschnitts ein Achsgehäuse 34, das eine Aufnahme für zwei rechts und links überstehende Achsteile 21 bildet, deren Achsen näherungsweise koaxial sind und sich liegend quer zur Fahrtrichtung erstrecken. Die beiden Achsteile 21 stehen dabei zu gegenüberliegenden Seiten des Achsträgers 1 über und umfassen jeweils einen Radantrieb 2, der in an sich bekannter Weise verschieden ausgebildet sein kann, beispielsweise in Form eines Hydromotors oder eines Elektromotors.

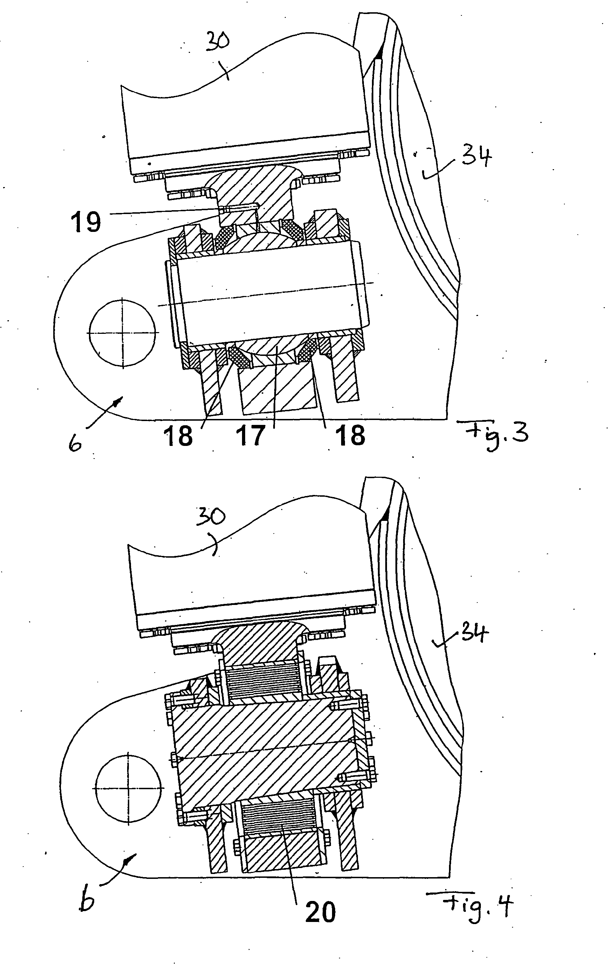

Der besagte Achsträger 1 umfasst in der gezeichneten Ausführungsform zwei Lagerstellen, die an gegenüberliegenden Enden des Achsträgers 1 vorgesehen sind, nämlich eine an dem Achsgehäuse 34 vorgesehene hintere Lagerstelle 6 sowie eine am vorderen Ende des Achsträgers 1 angeordnete vordere Lagerstelle 7, vgl. Figuren 1 und 2. An den beiden Lagerstellen 6 und 7 sind dabei jeweils Gelenklager bzw. kardanisch bewegliche Lager 28 und 29 vorgesehen, wie sie in den Figuren 3 und 4 dargestellt sind und noch näher erläutert werden. Die beiden Lager 28 und 29 sind dabei jeweils nach Art von Kugelgelenk- bzw. Kardangelenken mehrachsig beweglich, sie können jedoch vorteilhafterweise einen von einem herkömmlichen Kugelgelenk abweichenden Aufbau besitzen. Insbesondere erlauben sie Schwenkbewegungen des Achsträgers 1 jeweils um eine liegende Querachse sowie um eine ebenfalls liegende, sich in Längsrichtung des Achsträgers 1 erstreckende Pendelachse 23.

Während die vordere Lagerstelle 7 über das Lager 29 am Fahrzeugrahmen befestigt ist, ist über das Lager 28 die hintere Lagerstelle 6 an einem Federbein 30 befestigt, das mit seinem anderen Ende am Fahrzeugrahmen 3 über ein drittes Lager 31 angelenkt ist. Das Federbein 30 ist dabei vorteilhafterweise an der Lagerstelle unmittelbar am Achsgehäuse 34 abgestützt, die in der gezeichneten Ausführung die hintere Lagerstelle bildet. Grundsätzlich denkbar wäre es, die beiden Lagerstellen bzw. den Achsträger umzudrehen dahingehend, dass sich der Achsträger 1 vom Achsgehäuse 34 ausgehend nach hinten erstreckt, so dass die hintere Lagerstelle dann die am Fahrzeugrahmen angeschlagene Lagerstelle bildet und das Federbein an der vorderen Lagerstelle befestigt wäre. Die gezeichnete Ausführung ist jedoch die bevorzugte Gestaltung.

Das am oberen Ende des Federbeins 30 vorgesehene dritte Lager 31 ist vorteilhafterweise derart ausgebildet, dass das Federbein 30 um eine liegende Querachse schwenkbar am Fahrzeugrahmen 3 befestigt ist, wobei das Federbein 30 in Richtung dieser liegenden Querachse unverschieblich geführt ist und auch gegen Pendelbewegungen um Achsen senkrecht zu der besagten liegenden Querachse nicht kippen kann. Das Lager 31 kann hierbei durch die beiden rechts und links angeordneten hülsenförmigen Lagerelemente gebildet sein, vgl. Figur 1 und Figur 2. Wie Figur 2 am besten zeigt, ist das Federbeingehäuse 27 über massive Flanschplatten an der liegenden Querachse des oberen Gelenkpunkts des Federbeins schwenkbar befestigt, so dass das Federbein 30 eine stabile Querführungsstrebe bildet. Trotz des mehrachsigen unteren Gelenkpunktes an der hintere Lagerstelle 6 wird hierdurch der Achsträger 1 über das Federbein 30 in Querrichtung, also in Längsrichtung der Achsteile 21, stabil geführt. Der Achsträger 21 kann vorteilhafterweise im wesentlichen in vertikaler Richtung bzw. in Form einer Schwenkbewegung um die vordere Lagerstelle 7 auf und ab federn sowie um die liegende Pendelachse 23 pendeln. Ein Querauslenken hierzu ist jedoch vorteilhafterweise weitgehend unterbunden.

Um die Pendelbewegungen bezüglich der Pendelachse 23 zu dämpfen, ist eine Pendeldämpfungseinrichtung 26 vorgesehen, die die in Figur 1 am besten zu sehende Drehachse 12 umfasst, die sich auf der Oberseite des Achsträgers 1 im wesentlichen parallel zur Längsmittelebene des Achsträgers 1 erstreckt und gegenüber der Längsachse des Achsträgers 1 leicht spitzwinklig geneigt angeordnet ist. Mit ihrem vorderen Ende ist die Drehachse 12 mit einem Dämpfungshebel 13 drehfest verbunden, der um eine liegende, in Längsrichtung des Achsträgers 1 weisende Achse drehbar an dem Achsträger 1 gelagert ist und sich mit Hebelschenkeln zu beiden Seiten hin erstreckt, vgl. Figur 1. An dem besagten Dämpfungshebel 13 sind rechts und links des Achsträgers 1 angeordnete Dämpfungselemente 15 angeordnet, die über Gelenklager 14 und 16 einerseits gelenkig mit dem jeweiligen Schenkel des Dämpfungshebels 13 und andererseits an dem Achsträger 1 angelenkt sind. Vorteilhafterweise erstrecken sich die Dämpfungselemente 15 entlang den Seitenflanken des Achsträgers 1, an die sie sich im wesentlichen anschmiegen, so dass eine insgesamt kleinbauende Anordnung erreicht wird. Die Dämpfungselemente 15 können an sich bekannte teleskopierbare Öldämpfer sein, jedoch auch anders ausgebildet sein. Vorteilhafterweise sind sie längenveränderbar und bewirken die Dämpfung bei Längenänderung.

Wie Figur 1 zeigt, sind die Dämpfungselemente 15 sowie der Dämpfungshebel 13 im wesentlichen unmittelbar vor dem Achsgehäuse 34 angeordnet.

Mit ihrem hinteren Ende ist die Drehachse 12 drehfest mit einem Pendelanschlag 8 verbunden, der einer als Schiebeführung ausgebildeten Führung 9 in aufrechter Richtung beweglich geführt ist, so dass die Drehachse 12 Auf- und Abbewegungen des Achsträgers 1 ausgleichen bzw. mitmachen kann. Die Führung 9 ist dabei vorteilhafterweise derart ausgebildet, dass sie dem hinteren Ende der Drehachse 12 - grob gesprochen - eine kreisbogenförmige Bewegungsbahn um die vordere Lagerstelle 7 ermöglicht.

Die Führung 9 ist dabei vorteilhafterweise an dem Federbein 30 befestigt, genauer gesagt an dessen am Fahrzeugrahmen 3 befestigten Teil, der in der gezeichneten Ausführung von dem Federbeingehäuse 27 bzw. den daran angeschweißten Flanschplatten gebildet ist.

Der Pendelanschlag 8 ist dabei drehbar. Dabei ist der Pendelanschlag 8 mit dem Achsträger 1 gelenkig gekoppelt, und zwar mittels eines sich nach unten erstreckenden, von der Drehachse des Pendelanschlags 8 beabstandeten Anschlussstücks, das über ein Lager 10 mit dem Achsträger 1 schwenkbar gekoppelt ist, wobei das Lager 10 zumindest eine liegende Schwenkachse etwa parallel zur Pendelachse 23 verwirklicht, jedoch vorteilhafterweise auch mehrachsig gelenkig ausgebildet sein kann.

Damit ergibt sich folgende Funktion: Bei Auf- und Abbewegungen des Achsträgers 1 erfolgt eine entsprechende Abstützung des Achsträgers 1 durch das Federbein 30, wobei ein großer Federweg vorgesehen werden kann, und zwar ungeachtet der Pendeldämpfungseinrichtung 26, da deren Drehachse 12 in der Führung 9 ebenfalls auf und ab bewegt werden kann. Zum anderen können beispielsweise schräg verlaufende Längsrillen durch eine Pendelbewegung der einzelnen Räder um die genannte Pendelachse 23 ausgeglichen werden. Bei solchen Pendelbewegungen induziert der Achsträger 1 über das bewegliche Lager 10 eine Drehbewegung in den Pendelanschlag 8, die wiederum über die Drehachse 12 in eine Schwenkbewegung des Dämpfungshebels 13 umgesetzt wird. Dieser beaufschlagt die daran befestigten Dämpfungselemente 15, wodurch eine Dämpfung der Pendelbewegung erreicht wird.

Unterstützt wird die Pendeldämpfung durch die Ausbildung der Gelenklager insbesondere an den Lagerstellen 6 und 7. Wie Figur 3 zeigt, können diese Gelenklager 28 integrierte Lagerdämpfungselemente beispielsweise in Form von Gummiquetschelementen 18 umfassen, die an sich Dichtungselemente zur Abdichtung des Lagerbereichs nach außen hin bilden und zwischen den beweglichen Lagerteilen angeordnet sind. In der nach Figur 3 gezeichneten Ausführung kann das kardanisch bewegliche Lager 28 einen sphärisch gewölbten Lagerring 17 aufweisen, auf dem eine den Lagerring umgreifende Lagerpfanne, die ebenfalls ringförmig ausgebildet ist, mehrachsig beweglich sitzt. Zwischen diesen beiden beweglichen Gelenkteilen sind die Gummielemente 18 angeordnet.

Alternativ kann nach einer vorteilhaften Ausführung der Erfindung auch ein kardanisch bewegliches, vorgespanntes Gummimetalllager vorgesehen sein, wie dies Figur 4 zeigt. Auch hierdurch wird eine mehrachsige Beweglichkeit des Gelenklagers erzielt, wobei die mehrachsige Beweglichkeit gleichzeitig gedämpft wird. Insbesondere können hierbei mehrere Gummiquetschelemente 20 bzw. -schichten nach Art eines Federpakets in das Lager integriert sein, so dass die gewünschte kardanische Beweglichkeit durch entsprechende Verformung der Gummiquetschelemente erreicht wird. Vorteilhafterweise sind dabei die Gummiquetschelemente 20 derart stark vorgespannt, dass sie bei Bewegungen des Lagers nicht in den Zugbereich gelangen, sondern ausschließlich im Druckbereich beansprucht werden. Hierdurch kann neben einer hohen Standfestigkeit der Gummielemente eine hervorragende Dämpfungscharakteristik erreicht werden.

Figur 3 zeigt dabei auch eine in das Gelenklager integrierte Schmierzufuhr umfassend eine Bohrung 19, die beispielsweise über eine Querbohrung bis in die Tragflächen der Gelenkteile geführt ist.

## Patentansprüche

1. Achsaufhängung für Schwerfahrzeuge, insbesondere Truck, mit einem Achsträger (1), der auf gegenüberliegenden Seiten überstehende Achsteile (21), vorzugsweise mit jeweils einem Radantrieb (2), trägt, einer Achsträgerlagerung (22), die Auf- und Abbewegungen des Achsträgers (1) sowie Pendelbewegungen des Achsträgers (1) um eine im wesentlichen liegende Pendelachse (23) quer zur Längsrichtung (24) der Achsteile (21) zulässt, einer Federeinrichtung (25) zur federnden Abstützung der Auf- und Abbewegungen des Achsträgers (1) an einem Fahrzeugrahmen (3) sowie einer Pendeldämpfungseinrichtung (26) zur Dämpfung der Pendelbewegungen des Achsträgers (1), **dadurch gekennzeichnet, dass** die Pendeldämpfungseinrichtung (26) eine Drehachse (12) aufweist, die an einem mit dem Fahrzeugrahmen (3) verbundenen Teil (27) angelenkt ist und einen an dem Achsträger (1) drehbar angelenkten Dämpfungshebel (13) bei Pendelbewegungen des Achsträgers (1) rotatorisch antreibt, der auf zumindest ein an dem Achsträger (1) befestigtes Dämpfungselement (15) einwirkt.

2. Achsaufhängung nach dem vorhergehenden Anspruch, wobei die Drehachse (12) fahrzeugrahmenseitig an einem mit dem Fahrzeugrahmen (3) verbindbaren Federeinrichtungsteil (27) angelenkt ist.

3. Achsaufhängung nach einem der vorhergehenden Ansprüche, wobei die Drehachse (12) fahrzeugrahmenseitig über eine Führung (9) im wesentlichen in Richtung der Auf- und Abbewegung des Achsträgers (1) beweglich geführt ist.

4. Achsaufhängung nach dem vorhergehenden Anspruch, wobei die Drehachse (12) an ihrem führungsseitigen Ende mit einem Pendelanschlag (8) drehfest verbunden ist, der in der Führung (9) verschieblich und in Längsrichtung der Drehachse (12) drehbar geführt ist und mit dem Achsträger (1) derart gekoppelt ist, dass eine Pendelbewegung des Achsträgers (1) in eine Pendelbewegung des Pendelanschlags (8) umsetzbar ist.

5. Achsaufhängung nach dem vorhergehenden Anspruch, wobei der Pendelanschlag (8) mit dem Achsträger (1) durch ein Pendelanschlaggelenklager (10) verbunden ist, das eine vorzugsweise zur Längsrichtung der Drehachse (12) parallele Gelenksachse aufweist, die von der Drehachse (12) beabstandet ist.

6. Achsaufhängung nach einem der vorhergehenden Ansprüche, wobei das zumindest eine Dämpfungselement (15) längenveränderbar ausgebildet ist und jeweils vorzugsweise gelenkig einenends mit dem Dämpfungshebel (13) und anderenends mit dem Achsträger (1) verbunden ist.

7. Achsaufhängung nach einem der vorhergehenden Ansprüche, wobei sich die Drehachse (12) spitzwinklig geneigt zur Längsachse des Achsträgers (1), vorzugsweise in etwa in einer senkrechten Mittellängsebene des Achsträgers (1) erstreckt.

8. Achsaufhängung nach einem der vorhergehenden Ansprüche, wobei der Achsträger (1) zwei voneinander beabstandete, vorzugsweise an vorderen und hinteren Endabschnitten des Achsträgers (1) angeordnete, Lagerstellen (6, 7) aufweist, von denen die eine Lagerstelle (7) durch ein erstes Lager (28) gelenkig an einem Fahrzeugrahmenteil befestigt und die andere Lagerstelle (6) an der Federeinrichtung (25) befestigt ist.

9. Achsaufhängung nach dem vorhergehenden Anspruch, wobei die Federeinrichtung (25) durch ein zweites Lager (29) an dem Achsträger (1) befestigt ist.

10. Achsaufhängung nach dem vorhergehenden Anspruch, wobei das erste und/oder das zweite Gelenklager (28, 29) kardanisch beweglich und/oder nach Art eines Kugelgelenks bzw. Kardangelenks mehrachsig schwenkbar ausgebildet ist.

11. Achsaufhängung nach einem der beiden vorhergehenden Ansprüche, wobei das erste und/oder das zweite Lager (28, 29) mindestens ein bezüglich zumindest einer Bewegungsachse wirksames Lagerdämpfungselement (18, 20) aufweist.

12. Achsaufhängung nach dem vorhergehenden Anspruch, wobei das zumindest eine Lagerdämpfungselement (18, 20) in das Lager (28, 29) integriert ist.

13. Achsaufhängung nach einem der beiden vorhergehenden Ansprüche, wobei das zumindest eine Lagerdämpfungselement (18, 20) ein Gummiquetschelement ist.

14. Achsaufhängung nach einem der beiden vorhergehenden Ansprüche, wobei das erste und/oder das zweite Lager (28, 29) in Form eines vorgespannten Gummimetalllagers ausgebildet ist, das mindestens ein vorgespanntes Gummiquetschelement (20), vorzugsweise eine Mehrzahl aufeinanderliegender Gummiquetschelemente, aufweist, durch das bzw. durch die das Lager (28, 29) kardanisch beweglich ist.

15. Achsaufhängung nach dem vorhergehenden Anspruch, wobei die Vorspannung des Gummiquetschelements bzw. der Gummiquetschelemente derart bemessen ist, dass bei Bewegungen des Lagers eine Beanspruchung des zumindest einen Gummiquetschelements bzw. der mehreren Gummiquetschelemente ausschließlich im Druckbereich erfolgt.

16. Achsaufhängung nach einem der vorhergehenden Ansprüche, wobei die Federeinrichtung (25) als Federbein (30), vorzugsweise als Gasdruckfederbein, ausgebildet ist.

17. Achsaufhängung nach dem vorhergehenden Anspruch, wobei das Federbein (30) an dem Achsträger (1) mehrachsig schwenkbar angelenkt ist und eine Querführungsstrebe bildet, die den Achsträger (1) in Längsrichtung (24) der Achsteile (21) unverschieblich führt.

18. Achsaufhängung nach dem vorhergehenden Anspruch, wobei das Federbein (30) mittels eines dritten Lagers (31) an dem Fahrzeugrahmen (3) um eine Federbeinschwenkachse (32) parallel zur Längsrichtung (24) der Achsteile (21) schwenkbar angelenkt ist, wobei das dritte Lager (31) derart ausgebildet ist, dass das Federbein (30) in Richtung der genannten Federbeinschwenkachse (32) unverschieblich und bezüglich einer liegenden Achse quer zur genannten Federbeinschwenkachse (32) starr befestigt ist.

19. Achsaufhängung nach einem der beiden vorhergehenden Ansprüche, wobei die Drehachse (12) der Pendeldämpfungseinrichtung (26) mit einem an dem Fahrzeugrahmen (3) befestigten Federbeinteil (27) verbunden ist.

20. Achsaufhängung nach dem vorhergehenden Anspruch, wobei an dem genannten Federbeinteil (27) die Führung (9) zur verschieblichen Führung der Drehachse (12) in Richtung der Auf- und Abbewegungen des Achsträgers (1) befestigt ist.

21. Achsaufhängung nach einem der vorhergehenden Ansprüche, wobei die Drehachse (12) der Pendeldämpfungseinrichtung (26) zwischen den beiden Lagerstellen (6, 7) des Achsträgers (1), vorzugsweise in einem an die Achsteile (21) angrenzenden Mittelabschnitt des Achsträgers (1), an dem Achsträger (1) angelenkt ist.

22. Achsaufhängung nach einem der vorhergehenden Ansprüche in Verbindung mit Anspruch 8, wobei der Achsträger (1) mit dem Fahrzeugrahmen (3) alleine durch eine der beiden Lagerstellen (6, 7) und den Anlenkpunkt der Federeinrichtung (25) frei von Querlenkern und dergleichen verbunden ist.

23. Schwerfahrzeug, insbesondere Truck, mit einer Achsaufhängung nach einem der vorhergehenden Ansprüche.
